# EUROPEAN PATENT APPLICATION

(11) **EP 4 074 776 A1**
(43) Date of publication of application: **19.10.2022**
(21) Application number: 20897954.2
(22) Date of filing: 10.12.2020
(51) Int. Cl.: C08L 23/10, C08L 101/00

(54) **RESIN MATERIAL FOR MOULDING, AND MANUFACTURING METHOD FOR SAME**

(30) Priority: 10.12.2019 JP 2019222861
(71) Applicant: Nippon Paper Industries Co., Ltd., Tokyo 114-0002 (JP)
(72) Inventor: ONO, Hiroshi, Tokyo 114-0002 (JP); MATSUMOTO, Kei, Tokyo 114-0002 (JP); ISHINO, Yoichi, Tokyo 114-0002 (JP); KIMURA, Koichi, Tokyo 141-0032 (JP)
(74) Representative: Carpmaels & Ransford LLP
(86) International application number: PCT/JP2020/045988
(87) International publication number: WO 2021/117798

(57) **Abstract**

The subject of the present invention is to provide a resin material in which woody biomass and a thermoplastic resin are uniformly mixed, and which is easy to mold. The present invention provides a molding resin material containing a pulverized product from a woody biomass-derived torrefied product and a thermoplastic resin.

## Description

### TECHNICAL FIELD

The present invention relates to molding resin materials and methods for producing the same. In particular, the present invention relates to a thermoplastic molding material using a woody biomass-derived torrefied product and a thermoplastic resin, typified by polypropylene and polyethylene, as raw materials, and to a method for producing the same.

### BACKGROUND ART

Biomass materials are attracting attention as an industrial resource. A biomass material refers to a material derived from plants and other living organisms. Biomass materials are organic and emit carbon dioxide when burned. However, the carbon contained in the biomass materials is derived from the carbon dioxide that the biomass has absorbed from the atmosphere through photosynthesis during their growth. Accordingly, it can be considered that the use of biomass materials does not increase the amount of carbon dioxide in the ambient air as a whole. This nature is called carbon neutrality.

Against the background of global warming and other environmental problems, it is urgent to promote resource-saving, material recycling for using waste as raw materials, and the environmental recycling cycle typically for biodegradable plastics. In Japan, the Revised Recycling Law, the Green Purchasing Law, and so on have been developed, and products according to these laws are increasingly being demanded accordingly.

Under such circumstances, blending biomass materials into resin molded articles, which are widely used from automobile part materials to daily necessities, will promote the implementation of the carbon neutral philosophy. For example, PTL 1 discloses a composite material containing carboxymethylated cellulose nanofibers, a polymer compound having a primary amino group, an acid-modified polyolefin, and a polyolefin. PTL 2 discloses cellulosic composites containing wood pulp and a polymeric matrix. PTL 3 discloses a method for producing resin injection molded articles containing wood flour by mixing wood flour with random polypropylene resin and using an injection molding machine.

### CITATION LIST

### PATENT LITERATURE

PTL 1: International Publication WO2014/087767
PTL 2: National Publication of International Patent Application No. 2019-512591
PTL 3: JP 2010-138337A

### SUMMARY OF INVENTION

### TECHNICAL PROBLEM

However, when molding is performed by simply mixing "woody biomass" and "polypropylene" and heating and melting the mixture, there occur problems that woody biomass cannot be uniformly mixed with polypropylene because of the hydrophilicity of the woody biomass; that the resin mass is cut into small pieces at the outlet of the apparatus for injecting the mixture of woody biomass and polypropylene; that the surface of the resulting molded article is not smooth; and so on.

For example, PTL 1, which describes using carboxymethylated cellulose nanofibers, requires carboxymethylating cellulose and, further, adding a polymer compound having a primary amino group and an acid-modified polyolefin to improve the uniformity of dispersion into polyolefin resin. This results in increased costs.

Accordingly, the subject of the present invention relates to providing a woody biomass-mixed thermoplastic molding material, specifically, providing at low cost a molding material in which woody biomass and a thermoplastic resin are uniformly mixed and which is less likely to cut when molded by injection or the like.

### SOLUTION TO PROBLEM

The present inventors found that a highly moldable molding resin material can be obtained by torrefying woody biomass and then mixing the woody biomass with a thermoplastic resin, such as polypropylene or polyethylene, followed by heating and kneading, and thus accomplished the present invention.

The present invention provides, but is not limited to, the following:
(1) A molding resin material comprising a pulverized product from a woody biomass-derived torrefied product, and a thermoplastic resin.
(2) The molding resin material according to (1), wherein the molding resin material contains 10% to 90% by mass of the pulverized product from the woody biomass-derived torrefied product.
(3) The molding resin material according to (1) or (2), wherein the pulverized product from the woody biomass-derived torrefied product has an average particle size of 500 µm or less.
(4) The molding resin material according to any one of (1) to (3), wherein the thermoplastic resin includes a polyolefin-based resin.
(5) The molding resin material according to (4), wherein the thermoplastic resin includes a polypropylene-based resin.
(6) The molding resin material according to any one of (1) to (5), wherein the thermoplastic resin includes a biodegradable resin.
(7) A method for producing a molding resin material, the method comprising: a step of pulverizing a woody biomass-derived torrefied product; and a step of heating and kneading the pulverized torrefied product and a thermoplastic resin.
(8) The method according to (7), wherein the woody biomass-derived torrefied product is a product of torrefaction of woody biomass under conditions of an oxygen concentration of 10% or less and at 240°C to 350°C.
(9) The method according to (7) or (8), wherein in the step of heating and kneading, the molding resin material is continuously produced by treatment in a twin-screw kneading extruder.

### ADVANTAGEOUS EFFECTS OF INVENTION

The present invention enables consistent production of a molding resin material containing a woody biomass-derived torrefied product. Also, by increasing the proportion of the woody biomass-derived torrefied product, a molding resin material superior in terms of carbon neutrality can be produced.

### DESCRIPTION OF EMBODIMENTS

The torrefied product used in the present invention is obtained by torrefying ground woody biomass with a size of, for example, 50 mm or less under conditions of an oxygen concentration of 10% or less and a material temperature of 240°C to 350°C.

The present invention uses such a woody biomass-derived torrefied product. Wood used as a source of woody biomass can be any of hardwoods or softwoods. Specific examples of hardwoods include Eucalyptus, Para rubber tree, Japanese Beech, Japanese Lime, White Birch, poplar, acacia, oak, Acer mono, Kalopanax, Ulmus, Empress tree, Japanese Bigleaf Magnolia, Willow, Kalopanax, Quercus phillyraeoides, Quercus serrata, Sawtooth Oak, Aesculus turbinata, Japanese zelkova, Japanese Cherry Birch, giant dogwood, and Fraxinus lanuginose. Specific examples of softwoods include Japanese Cedar, Yezo Spruce, Japanese Larch, Japanese Black Pine, Sakhalin Fir, Japanese White Pine, Japanese Yew, Japanese Thuja, tigertail spruce, Picea bicolor, Yew plum pine, Japanese Fir, Sawara cypress, Japanese Douglas Fir, False arborvitae, Hiba, Southern Japanese Hemlock, Northern Japanese Hemlock, Japanese cypress, Japanese yew, Japanese plum-yew, spruce, Yellow Cedar (Alaska Cedar), Lawson's cypress (Port-Orford Cedar), Douglas Fir (Oregon Pine), Sitka Spruce, Radiata Pine, Eastern Spruce, Eastern White Pine, Western Larch, Western Fir, Western Hemlock, and Tamarack. The wood to be used is however not limited to those.

Among those, Eucalyptus wood and Para rubber tree (Hevea brasiliensis) are preferable. Examples of Eucalyptus include Eucalyptus (hereinafter abbreviated as E.) calophylla, E. citriodora, E. diversicolor, E. globulus, E. grandis, E. urograndis, E. gummifera, E. marginata, E. nesophila, E. nitens, E. amygdalina, E. camaldulensis, E. delegatensis, E. gigantea, E. muelleriana, E. obliqua, E. regnans, E. sieberiana, E. viminalis, and E. marginata.

In the present invention, the woody biomass used as the raw material may be in any form, and preferred examples include, but are not limited to, wood chips, bark, wood powder, and sawdust. In a preferred embodiment, woody biomass of 50 mm or less in size can be used as the raw material. For example, woody biomass may be ground to a size of 50 mm or less. Preferably, woody biomass ground to a size of 1 mm or more and 50 mm or less is used as the raw material. In the present invention, the size of ground woody biomass is that defined by the size of circular openings of a sifter. For grinding, the woody biomass is ground preferably with, for example, a hammer mill or a knife-cutting type chipper for biomass fuels.

In the present invention, a woody biomass-derived torrefied product is used. In general, torrefaction refers to a heating treatment performed at lower temperatures than the temperature for what is called carbonizing treatment in a low oxygen atmosphere. Wood is generally subjected to carbonizing treatment at 400°C to 700°C but is, in the present invention, torrefied at 240°C to 350°C. Torrefaction provides a solid fuel having a higher energy density than that of the starting material thereof.

In the present invention, torrefaction is performed under treatment conditions of an oxygen concentration of 10% or less and a material temperature of 240°C to 350°C. The material temperature in the torrefaction is the temperature of the woody biomass at and around the outlet of the apparatus for torrefying treatment. In the present invention, torrefaction is performed under the condition of an oxygen concentration of 10% or less. An oxygen concentration exceeding 10% can reduce material yield and calorific yield.
The torrefied product is difficult to pulverize to smaller particle sizes at a material temperature of less than 240°C. Also, if the material temperature increases to more than 350°C, the material yield and the calorific yield decrease. The material temperature is preferably 240°C to 330°C, more preferably 250°C to 320°C. Pyrolysis of hemicellulose becomes marked at and around 270°C, whereas cellulose and lignin are markedly pyrolyzed at and around 355°C and 365°C, respectively. Accordingly, it can be expected that a molding resin material capable of providing both satisfactory material yield and pulverizability will be produced by controlling the torrefaction temperature at 170°C to 350°C to allow the preferential pyrolysis of hemicellulose.

In the present invention, the apparatus for torrefying treatment is preferably, but not particularly limited to, a rotary kiln and/or a vertical furnace. Preferably, the inside of the apparatus is purged with an inert gas, such as nitrogen, to adjust the oxygen concentration to 10% or less. Preferably, the torrefying treatment period is, for example, but not particularly limited to, 1 to 180 minutes, more preferably 5 to 120 minutes, still more preferably 10 to 60 minutes. When a continuous apparatus is used, the residence time in the torrefying apparatus can be controlled.

In the present invention, an external heat-type torrefying apparatus may be used as the apparatus for torrefying treatment. For example, an external combustion rotary kiln is an apparatus having a structure in which the kiln outer cylinder partially or entirely covers the kiln inner cylinder. Woody biomass is torrefied in the inner cylinder, and the fuel is burned in the outer cylinder to indirectly heat the woody biomass within the inner cylinder. The temperature within the kiln outer cylinder may be set to 400°C to 800°C and is preferably 450°C to 750°C. A temperature within the kiln outer cylinder of less than 400°C leads to insufficient pyrolysis of woody biomass within the kiln inner cylinder, reducing the pulverizability of the resulting solid fuel. In contrast, a temperature of more than 800°C excessively increases the temperature of the woody biomass within the kiln inner cylinder, reducing the material yield and calorific yield of the resulting solid fuel.

The torrefied product used in the present invention preferably provides a material yield of 60% to 90% and a calorific yield of 70% to 95% with respect to the raw material woody biomass. The hardgrove grindability index (HGI), which is an index of the pulverizability and is specified in JIS M 8801: 2004, is preferably 25 or more, more preferably 30 or more. The higher the HGI, the easier to pulverize the material. When the HGI is in the range of 25 to 70, the torrefied product is easy to mix with a thermoplastic resin for molding treatment.

The torrefied product of the present invention used in the present invention may be formed into a shape. More specifically, the starting material (torrefied product) in a woody biomass-ground state is compacted into briquettes or pellets. Forming into such compacts facilitates handling and increases density, reducing transportation costs. Preferably, the bulk density of the compacts after compaction is 500 kg/m³ or more, more preferably 600 kg/m³ or more. The bulk density can be measured in accordance with JIS K 2151, 6. "Test Method for Bulk Density".

In the present invention, the apparatus for forming the torrefied product into compacts is not particularly limited but is desirably, for example, a briquetter (manufactured by Kitagawa Corporation), a ring die pelletizer (manufactured by CPM), a flat die pelletizer (manufactured by Kahl or Dalton Corporation), or the like.

When the torrefied product is formed into compacts in the present invention, the moisture content of the torrefied product is preferably 8% to 50%, more preferably 10% to 30%. The torrefied product with a moisture content of less than 8% clogs the inside of the briquetter or pelletizer, failing to form compacts consistently. The torrefied product with a moisture content of more than 50% is difficult to form into compacts and is discharged in the form of powder or paste.

In the present invention, a binder may be added into the torrefied product. Suitable examples of the binder include, but are not particularly limited to, organic polymers such as starch and lignin, inorganic polymers such as acrylamide, and agricultural residues such as bran (residue from wheat flour production). From the viewpoint of aiming at efficient and effective use of woody biomass, the proportion of the binder added is desirably smaller and is preferably 50 parts by mass or less, more preferably 20 parts by mass or less, relative to 100 parts by mass of the torrefied product. However, even if 50 parts by mass or more of binder is added, compaction is not necessarily impossible.

In the present invention, the torrefied product is preferably pulverized before kneading with a thermoplastic resin. The average particle size of the pulverized product is preferably 500 µm or less, more preferably 300 µm or less, and particularly preferably 200 µm or less. The pulverized product from the torrefied product, having an average particle size of more than 500 µm is difficult to uniformly mix with the resin and can cause problems that the resin mass in the mixture of the pulverized product and the resin is cut into small pieces at the outlet of the apparatus for injecting the mixture, that transportation to the cooling device is difficult, and so on. The average particle size refers to the 50% volume average particle size (D50) determined by a laser light scattering method (laser diffraction method) and can be measured with a laser diffraction/scattering particle size analyzer (apparatus name: Mastersizer 2000, manufactured by Malvern) or the like.

The pulverizer used for pulverizing the torrefied product can be an apparatus capable of pulverizing organic matter, and examples include, but are not limited to, ball mills, rod mills, bead mills, conical mills, disk mills, edge mills, hammer mills, mortars, pellet mills, VSI mills, wheel mills, roller mills, Jet mills, and mass colloiders. The pulverizer may be a twin-screw kneading extruder (TEX series, such as TEX 30, manufactured by Japan Steel Works) or the like.

The molding resin material of the present invention can be obtained by heating and kneading the above-described torrefied product with a thermoplastic resin. A higher proportion of the torrefied product in the molding resin material is preferable to achieve a high level of carbon neutrality. In view of the resin material to be obtained and the manufacture and strength of molded articles, the proportion of the torrefied product is preferably 10% by mass or more and 90% by mass or less, more preferably 30% by mass or more and 80% by mass or less.

The thermoplastic resin used in the present invention is preferably formed into particles in view of handling but may be in any form. Two or more thermoplastic resins may be used at one time. The thermoplastic resins include biodegradable thermoplastic resins. From the viewpoint of enhancing the uniformity and adhesion in kneading with the torrefied product, a compatibilizing resin (compatibilizer) that is a thermoplastic resin may be added.

Examples of the thermoplastic resin include, but are not limited to, polyethylene and polypropylene. Any other resin that can be plasticized by heat may be used. Polyethylene, such as LDPE (low-density polyethylene), and polypropylene are particularly preferable in view of moldability.

In the present invention, a biodegradable resin may be used as the thermoplastic resin. Examples of the biodegradable thermoplastic resin include, but are not limited to, polylactic acid (PLA), polybutylene succinate, polyethylene succinate, polyglycol, polycaprolactone, and polyvinyl alcohol.

Known compatibilizer may be used as the compatibilizing resin, and examples include, but are not limited to, maleic acid-modified polypropylene (UMEX 1010, produced by Sanyo Chemical Industries) and Modic (registered trademark) P908 (produced by Mitsubishi Chemical Corporation). The compatibilizing rein functions to increase the mixing uniformity and adhesion of the torrefied product with the thermoplastic resin. The compatibilizing resin is not necessarily used. If used, the amount to be used is such that up to about 15% by mass is contained in the molding resin material obtained by kneading.

The molding resin material of the present invention can form molded products by heat treatment. The temperature for the heat treatment (treatment for heating, melting, kneading, and so on) of the molding resin material of the present invention is normally about 100°C to 300°C, preferably about 110°C to 250°, and particularly preferably about 120°C to 220°C. The molded product obtained by the heat treatment may be formed into a desired shape by known resin molded products.

In the method for producing the molding resin material of the present invention, an apparatus generally used for resin molding may be used for heating and kneading the torrefied product and a thermoplastic resin. For example, a conventional extruder or twin-screw kneading extruder may be used. Twin-screw kneading extruders are advantageous because they can be used in both the steps of pulverizing the woody biomass-derived torrefied product and kneading the pulverized torrefied product and a thermoplastic resin and thus enable the molding resin material to be continuously produced by linking twin-screw kneading extruders or by continuously performing the two steps with a single twin-screw kneading extruder. TEX series manufactured by Japan Steel Works may be used as the twin-screw kneading extruder.

A variety of molded articles can be produced using the molding resin material of the present invention. Common methods used for molding a thermoplastic resin can be applied to the molding. Examples of such methods include, but are not limited to, injection molding, extrusion, blow molding, die molding, hollow molding, and foam molding.

The molding resin material of the present invention or the molded articles obtained by molding the molding resin material may contain organic matter and/or inorganic matter other than the thermoplastic resin and the torrefied product. Such other constituents include, for example, alkalis, such as sodium hydroxide, potassium hydroxide, magnesium hydroxide, and calcium hydroxide; inorganic fillers, such as clay, talc, calcium carbonate, mica, titanium dioxide, and zinc oxide; organic fillers, such as carbon black, graphite, and glass flakes; dyes or pigments, such as colcothar, azo pigments, and phthalocyanine; and modification additives, such as dispersants, lubricants, plasticizers, release agents, flame retardants, antioxidants (phenol-based antioxidants, phosphorus antioxidants, sulfur-based antioxidants), antistatic agents, light stabilizers, ultraviolet absorbent, metal inactivators, crystallization accelerators (nucleating agents), foaming agents, crosslinking agents, and antibacterial agents.

The molding resin material of the present invention can be molded according to various purposes and can be applied to the manufacture of a wide variety of substitutes for plastic products, namely trays or the like, automobile parts, automobile dashboards and other interiors, airplane luggage compartments, structural members of transportation equipment, enclosures (housings) of household appliances, cards, toner containers and various other containers, construction materials, seedling pots, agricultural sheets, writing instruments, substitutes for wooden products, household utensils, straws, cups, toys, sporting goods, harbor components, construction components, power generator components, tools, fishing equipment, packaging materials, 3D printer-modeling products, and pallets. These products will be disposed of when no longer needed. However, even though, for example, they are incinerated and emit carbon dioxide, the carbon dioxide derived from the woody biomass-derived torrefied product can be considered to be a portion that does not increase the amount of carbon dioxide in the ambient air.

### EXAMPLES

Although the present invention will be further described in detail with reference to Experimental Examples of the present invention, the present invention is not limited to the Experimental Examples. Note that "part(s)" and "%" represent part(s) by mass and % by mass, respectively, unless otherwise specified, and that the range of values includes the endpoints of the range.

### Sample 1

Eucalyptus urograndis wood chips were subjected to grinding treatment with a disc chipper. After grinding, the chip-ground material of 1 mm to 50 mm in size was dried using a conveyor dryer (manufactured by Alvan Blanch) at a hot air temperature of 70°C for 3 hours to adjust the moisture content to 10%.

The chip-ground material was then torrefied at an oxygen concentration of 1% or less and a residence time of 12 minutes in a large rotary kiln-type carbonizing furnace with the material temperature of the chip-ground material in the carbonizing furnace controlled to 280°C, thus obtaining a woody biomass-derived torrefied product. The resulting torrefied product was uneven in particle size and included particles of 1 mm to 50 mm in size. The torrefied product was crushed to 5 mm or less with a hammer mill after being cooled. The moisture content of the crushed material of the torrefied product was adjusted to 12%, and the crushed material was compacted into pellets (diameter: about 8 mm, length: about 26 mm) in a ring die pelletizer (manufactured by Triumph) using a ring die with a die hole diameter of 8 mm and a die thickness of 26 mm.

Next, the pellets were introduced into a twin-screw kneading extruder (TEX 30, manufactured by Japan Steel Works). Thus, the pelletized torrefied product was pulverized to an average particle size of about 150 µm. The average particle size of the pulverized product from the torrefied product was measured with an automated sonic vibrating sieving analyzer (Robot Sifter RPS-105, manufactured by Seishin Enterprise Co., Ltd.).

Then, the pulverized product from the torrefied product and a polypropylene (J106G, produced by Prime Polymer, melt flow rate: 15 g/10 min) were mixed in a ratio of 50:50 and continuously heated and kneaded at 200°C in a twin-screw kneading extruder (TEX 30, manufactured by Japan Steel Works) to produce a molding resin material (weight ratio of pulverized product from torrefied product to polypropylene = 50:50).

### Sample 2

A molding resin material was produced in the same manner as Sample 1, except that torrefaction was performed under conditions where the material temperature of the chip-ground material in the large rotary kiln-type carbonizing furnace was controlled to 280°C, and that a polypropylene (J107G, produced by Prime Polymer) with a melt flow rate of 30 g/10 min and the pulverized product from the torrefied product were mixed in a ratio of 50:50.

### Sample 3

A molding resin material was produced in the same manner as Sample 2, except that the polypropylene (J107G, produced by Prime Polymer) with a melt flow rate of 30 g/10 min and the pulverized product from the torrefied product were mixed in a ratio of 40:60.

### Sample 4

A molding resin material was produced in the same manner as Sample 1, except for using a polypropylene (J108M, produced by Prime Polymer) with a melt flow rate of 45 g/10 min.

### Sample 5

A molding resin material was produced in the same manner as Sample 1, except that the pellets were introduced into a twin-screw kneading extruder (TEX 30, manufactured by Japan Steel Works) and pulverized so that the pelletized material of the torrefied product had an average particle size of about 200 µm.

### Sample 6 (Comparative Example)

Only a polypropylene (J107G, produced by Prime Polymer) was used as the raw material and was heated and kneaded at 200°C in a twin-screw kneading extruder (TEX 30, manufactured by Japan Steel Works), thus producing a molding resin material.

### Sample 7 (Comparative Example)

A polypropylene (J107G, produced by Prime Polymer) and a cellulose powder (W-50GK, average particle size of 47 µm, produced by Nippon Paper Industries) were mixed in a ratio of 70:30. The mixture was heated and kneaded at 200°C in a twin-screw kneading extruder (TEX 30, manufactured by Japan Steel Works), thus producing a molding resin material.

### Sample 8 (Comparative Example)

A molding resin material was produced in the same manner as Sample 7, except that the polypropylene and the cellulose powder were mixed in a ratio of 50:50.

### Evaluation of Molding Resin Materials

The melt flow rate (MFR) of the resulting molding resin materials was measured in accordance with JIS K 7210. More specifically, the measurement was performed under conditions at a measurement temperature of 230°C and a test load of 2.16 kg using a melt flow indexer (G-20, manufactured by Toyo Seiki Seisaku-sho).

**[Table 1]**

| Sample | Polypropylene (%) | Pulverized product from woody biomass-derived torrefied product (%) | Cellulose powder (%) | Melt flow rate (g/10min) |
|---|---|---|---|---|
| 1 | 50 | 50 | 0 | 7.5 |
| 2 | 50 | 50 | 0 | 10.3 |
| 3 | 40 | 60 | 0 | 6.7 |
| 4 | 50 | 50 | 0 | 13.7 |
| 5 | 50 | 50 | 0 | 4.3 |
| 6 (Comparative Example) | 100 | 0 | 0 | 30.0 |
| 7 (Comparative Example) | 70 | 0 | 30 | 3.7 |
| 8 (Comparative Example) | 50 | 0 | 50 | 1.1 |

As presented in Table 1, the molding resin materials of the present invention had higher melt flow rates than those produced by adding cellulose powder to polypropylene. The present invention enables the production of a molding resin material that is superior in flowability and allows extrusion.

## Claims

1. A molding resin material comprising: a pulverized product from a woody biomass-derived torrefied product; and a thermoplastic resin.

2. The molding resin material according to claim 1, wherein the molding resin material contains 10% to 90% by mass of the pulverized product from the woody biomass-derived torrefied product.

3. The molding resin material according to claim 1 or 2, wherein the pulverized product from the woody biomass-derived torrefied product has an average particle size of 500 µm or less.

4. The molding resin material according to any one of claims 1 to 3, wherein the thermoplastic resin includes a polyolefin-based resin.

5. The molding resin material according to claim 4, wherein the thermoplastic resin includes a polypropylene-based resin.

6. The molding resin material according to any one of claims 1 to 5, wherein the thermoplastic resin includes a biodegradable resin.

7. A method for producing a molding resin material, the method comprising:
a step of pulverizing a woody biomass-derived torrefied product; and
a step of heating and kneading the pulverized torrefied product and a thermoplastic resin.

8. The method according to claim 7, wherein the woody biomass-derived torrefied product is a product of torrefaction of woody biomass under conditions of an oxygen concentration of 10% or less and at 240°C to 350°C.

9. The method according to claim 7 or 8, wherein in the step of heating and kneading, the molding resin material is continuously produced by treatment in a twin-screw kneading extruder.
